# DEMANDE DE BREVET EUROPEEN

(11) **EP 4 681 889 A1**
(43) Date de publication de la demande: **21.01.2026**
(21) Numéro de dépôt: 25189810.2
(22) Date de dépôt: 16.07.2025
(51) Int. Cl.: B25J 9/04, B25J 15/06, B25J 19/02, B25J 19/06

(54) **APPAREIL DE TRAITEMENT D' ARTICLES**

(30) Priorité: 19.07.2024 FR 2407979
(71) Demandeur: Exotec Product France, 59170 Croix (FR)
(72) Inventeur: MOURET, Julien, 59700 MARCQ EN BAROEUL (FR); LEPILLIER, Loïc, 59150 WATTRELOS (FR)
(74) Mandataire: Plasseraud IP

(57) **Abrégé**

Appareil de traitement d'articles (10) mobile comprenant :
- un châssis (20),
- un bras robotisé (50) monté sur le châssis (20) et muni à son extrémité d'un organe de préhension (51), le bras robotisé (50) étant configuré pour saisir et/ou déposer un article dans un volume interne d'au moins un conteneur (110) disposé à proximité dudit châssis (20) ,
- une structure de support (30) montée sur le châssis (20),
- au moins une caméra (40) fixée sur la structure de support (30),
caractérisé en ce que la structure de support (30) est mobile entre une configuration déployée (CD) dans laquelle la caméra (40) est apte à acquérir une image du volume interne du conteneur (110) et une configuration escamotée (CE) dans laquelle l'appareil de traitement d'articles (10) présente un volume inférieur par rapport à la configuration déployée (CD).

## Description

### Domaine technique

La présente description relève du domaine de la robotique, et notamment des bras robotiques à usage industriel. La présente description se rapporte à un appareil de traitement d'articles comportant un bras robotique. La présente description se rapporte également à un ensemble de logistique comprenant un tel appareil de traitement d'articles et à une rampe de surélévation.

### Technique antérieure

Dans le domaine de la logistique, il est connu qu'un opérateur ou un robot réalise des opérations de préparation de commande consistant à déplacer des articles entre un premier conteneur et un deuxième conteneur de manière manuelle ou automatisée (aussi appeler « *pick and place »* en anglais). Typiquement, le premier conteneur comprend des articles en stock et provient d'un rayonnage d'un système automatisé de stockage et récupération (aussi appelé ASRS pour *« Automatic storage and retrieval system »* en anglais), et le deuxième conteneur est destiné à contenir les articles d'une commande en vue d'une livraison à un client.

Classiquement, ces opérations de « *pick and place* » sont réalisées au niveau d'une installation comprenant le robot préhenseur. Le robot préhenseur comprend généralement un châssis ancré de manière définitive au sol, un bras robotisé et un organe préhenseur permettant la saisie et la dépose des articles.

Pour limiter la fatigue due aux déplacements, et réduire le temps de préparation de commande, les conteneurs peuvent être acheminés jusqu'à cette installation et ensuite expédiés par le biais d'un convoyeur qui est aussi ancré de manière définitive à proximité du robot préhenseur.

Afin d'identifier et localiser les articles à saisir, l'installation comprend généralement une caméra montée sur une structure portante fixée au sol de sorte à être positionnée en hauteur et orientée vers une zone par laquelle transitent les articles. L'installation est encore munie d'une unité de calcul pour le traitement des images de la caméra et le contrôle du robot préhenseur.

Un autre exemple d'installation comprenant un bras robotisé et un organe préhenseur est divulgué dans le document US 2023/0234216. Dans cette installation, le bras robotisé est fixé à une structure porteuse qui est disposée au-dessus d'un convoyeur d'entrée transportant un premier conteneur et d'un convoyeur de sortie transportant un deuxième conteneur. Le bras robotisé est configuré pour déplacer un article du premier conteneur vers le deuxième conteneur.

On comprend que de telles installations présentent d'abord l'inconvénient d'être imposantes ce qui rend difficile leur acheminement au sein d'un entrepôt et requiert un espace important dans l'entrepôt dans lequel est prévue leur installation. En outre, en raison de l'ancrage au sol, ces installations sont peu flexibles et ne permettent pas un réaménagement aisé de l'entrepôt. Enfin, la mise en place des liaisons électriques entre le bras préhenseur, la caméra et l'unité de calcul rend la mise en place de ces installations longue et couteuse.

Le document US 2023/415345-A1 décrit un appareil mobile de saisie et dépose d'articles, comprenant un châssis pourvu de roues pour déplacer l'appareil, un support vertical fixé au châssis, et, associés au support vertical, une première plateforme pour supporter un premier conteneur, une seconde plateforme pour supporter un deuxième conteneur, un bras robotisé pour saisir un objet du premier conteneur et le déposer dans le second conteneur, et une caméra. La première plateforme et la deuxième plateforme sont mobiles verticalement le long du support et comprennent chacune un mécanisme de poussée-tirage pour charger et décharger un conteneur sur l'appareil. La caméra est montée sur un bras mobile en rotation entre une position permettant le mouvement vertical des plateformes et une position permettant l'acquisition d'une image du premier conteneur et/ou du deuxième conteneur par la caméra. Cet appareil mobile hautement automatisé se déplace typiquement dans les rayonnages d'un ASRS pour préparer une commande mais ne permet pas la préparation de commandes avec une cadence élevée.

### Résumé

Il est proposé un appareil de traitement d'articles mobile comprenant :
- un châssis,
- un bras robotisé monté sur le châssis et muni à son extrémité d'un organe de préhension, le bras robotisé étant configuré pour saisir et/ou déposer un article dans un volume interne d'au moins un conteneur disposé à proximité dudit châssis ,
- une structure de support montée sur le châssis,
- au moins une caméra fixée sur la structure de support,
caractérisé en ce que la structure de support est mobile entre une configuration déployée dans laquelle la caméra est apte à acquérir une image du volume interne du conteneur et une configuration escamotée dans laquelle l'appareil de traitement d'articles présente un volume inférieur par rapport à la configuration déployée.

La structure de support peut être articulée pivotante par rapport au châssis autour d'un premier axe.

La structure de support peut comprendre au moins un bras de support qui comporte un premier segment et un deuxième segment, le deuxième segment étant articulé pivotant par rapport au premier segment autour d'un deuxième axe.

Le premier axe et le deuxième axe peuvent être parallèles, la structure de support comprenant un premier bras de support et un deuxième bras de support parallèles entre eux et espacés selon la direction du premier axe et du deuxième axe.

La structure de support peut comprendre au moins une traverse s'étendant entre le premier bras de support et le deuxième bras de support selon la direction du premier axe et du deuxième axe, ladite au moins une caméra étant de préférence fixée à ladite au moins une traverse.

Le châssis peut présenter, selon une première direction, un côté avant configuré pour faire face audit au moins un conteneur et un côté arrière opposé au côté avant selon la première direction, le bras robotisé étant monté sur le châssis plus proche du côté avant que du côté arrière, le châssis présentant de préférence un centre de gravité plus proche du côté arrière que du côté avant.

L'appareil de traitement d'articles peut présenter une profondeur selon la première direction qui est plus petite lorsque la structure de support est dans la configuration escamotée que lorsqu'il est dans la configuration déployée.

L'appareil de traitement d'articles peut présenter une hauteur selon une direction verticale qui est plus petite lorsque la structure de support est dans la configuration escamotée que lorsqu'il est dans la configuration déployée.

L'appareil de traitement d'articles peut présenter un volume lorsque la structure de support est dans la configuration escamotée le rendant apte à être introduit dans un conteneur de forme parallélépipédique de dimensions standards, notamment de 20 pieds ou 40 pieds.

L'organe de préhension peut être un préhenseur pneumatique par le vide, l'appareil de traitement d'articles comprenant une source de vide disposée à l'intérieur du châssis et en communication fluidique avec l'organe de préhension.

L'appareil de traitement d'articles peut comprendre une unité de contrôle configurée pour contrôler le bras robotisé et pour traiter un signal reçu de ladite au moins une caméra afin d'identifier des articles dans les conteneurs et/ou de localiser l'emplacement d'articles dans les conteneurs, l'unité de contrôle étant disposée à l'intérieur du châssis.

Le châssis peut comprendre au moins un évidement inférieur et/ou une paire de trous, adaptés pour recevoir les broches d'une fourche de levage.

L'appareil de traitement d'articles peut comprendre un système de capteurs de sécurité configuré pour projeter une barrière immatérielle et détecter le franchissement de la barrière immatérielle par un objet et/ou un opérateur.

La barrière immatérielle peut comprendre :
- un faisceau central s'étendant transversalement au niveau d'un côté arrière du châssis opposé au côté avant selon la première direction,
- une paire de faisceaux latéraux s'étendant chacun selon la première direction et agencée transversalement à la première direction de chaque côté du châssis.

L'appareil de traitement d'articles peut comprendre un panneau de protection monté sur le châssis au niveau du côté arrière.

L'appareil de traitement d'articles peut présenter une masse inférieure ou égale à 700 kg.

Selon un autre aspect, il est proposé un ensemble pour entrepôt de logistique comprenant un appareil de traitement d'articles tel que décrit ci-avant et une rampe de surélévation, la rampe de surélévation étant configurée pour permettre l'acheminement dudit au moins un conteneur à proximité du châssis par un véhicule motorisé de sorte que le bras robotisé soit apte à saisir et/ou déposer un article dans le volume interne du conteneur.

L'ensemble pour entrepôt de logistique peut comprendre un conteneur disposé à proximité du châssis de l'appareil de traitement d'articles, ladite au moins une caméra étant agencée en face du fond du conteneur lorsque la structure de support est dans la configuration déployée.

### Brève description des dessins

D'autres caractéristiques, détails et avantages apparaîtront à la lecture de la description détaillée ci-après, et à l'analyse des dessins annexés, sur lesquels :
Figure 1 est une vue schématique de côté d'un appareil de traitement d'articles selon la présente description, dans lequel une structure de support est dans une configuration déployée.
Figure 2 est une vue schématique de côté de l'appareil de traitement d'articles de la figure 1, dans lequel une structure de support est dans une configuration escamotée.
Figure 3 est une vue schématique en perspective de la structure de support de l'appareil de traitement d'articles des figures 1 et 2, dans la configuration déployée.
Figure 4 est une vue schématique partielle en perspective d'un châssis de l'appareil de traitement d'articles des figures 1 et 2.
Figure 5 est une vue schématique en perspective de l'appareil de traitement d'articles de la figure 2.
Figure 6 est une vue schématique en perspective de l'appareil de traitement d'articles de la figure 1 et d'une rampe de surélévation permettant l'acheminement de conteneurs comprenant des articles, à proximité de l'appareil de traitement d'articles, notamment par des véhicules motorisés, de préférence autonomes.
Figure 7 comprend les figures 7a et 7b qui représentent des premiers moyens de butée de la structure de support.
Figure 8 comprend les figures 8a et 8b qui représentent des deuxièmes moyens de butée de la structure de support.
Figure 9 est une vue schématique de dessus de l'appareil de traitement d'article de la figure 1 dans laquelle est représentée une barrière immatérielle de protection.

### Description des modes de réalisation

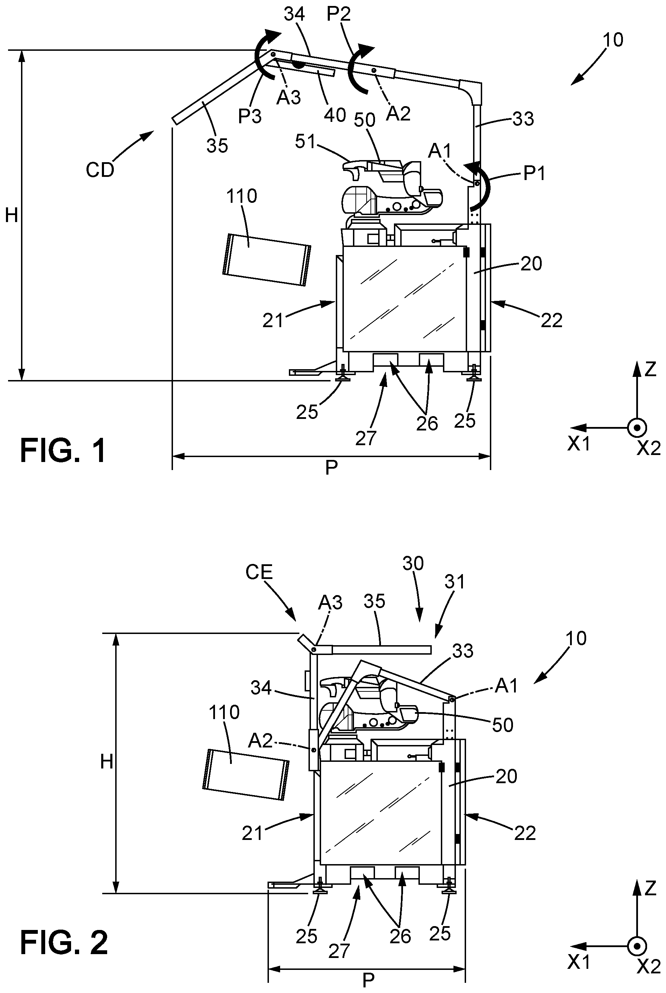

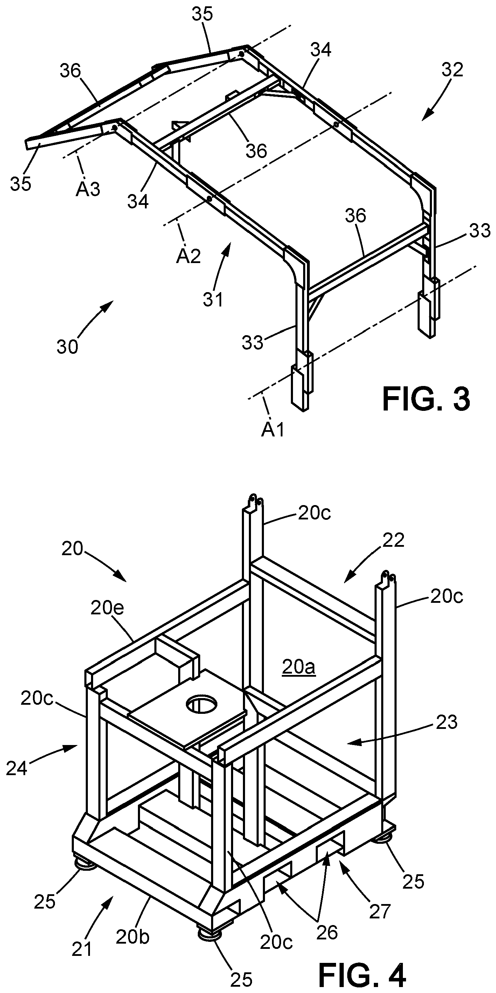

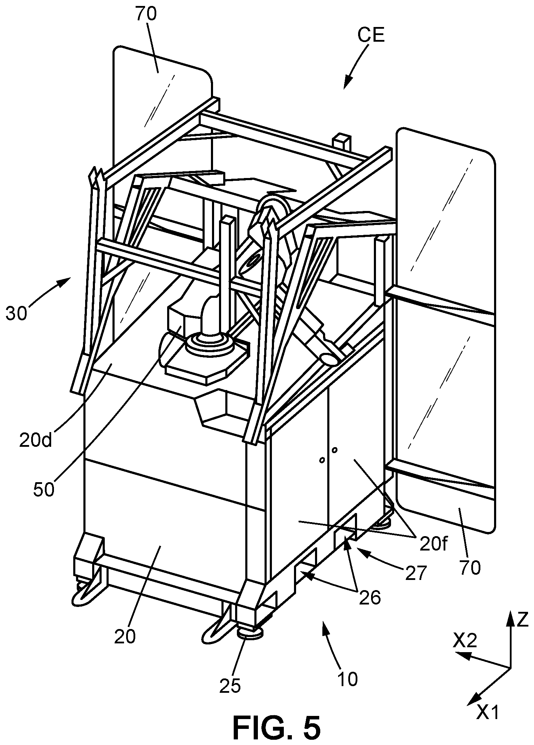

Il est maintenant décrit, en référence aux figures 1 à 5, un appareil de traitement d'articles 10 mobile qui comprend :
- un châssis 20,
- un bras robotisé 50 monté sur le châssis 20 et muni à son extrémité d'un organe de préhension 51, le bras robotisé 50 étant configuré pour saisir et/ou déposer un article dans un volume interne d'au moins un conteneur 110 disposé à proximité dudit châssis 20 ,
- une structure de support 30 montée sur le châssis 20,
- au moins une caméra 40 fixée sur la structure de support 30.

L'appareil de traitement d'articles est mobile et peut ainsi être déplacé librement dans un entrepôt logistique, notamment à l'aide d'un chariot élévateur ou un transpalette. L'appareil est entièrement transportable, c'est-à-dire non fixé à une infrastructure permanente telle qu'un rail.

De manière remarquable, la structure de support 30 est mobile entre une configuration déployée CD dans laquelle la caméra 40 est apte à acquérir une image du volume interne du conteneur 110 et une configuration escamotée CE dans laquelle l'appareil de traitement d'articles 10 présente un volume inférieur par rapport à la configuration déployée CD. Autrement dit, l'encombrement global de l'appareil de traitement d'articles avec la structure de support dans la configuration escamotée est réduit par rapport à celui avec la structure de support dans la configuration déployée. L'appareil de traitement d'articles 10 est ainsi plus facile à transporter lorsque la structure de support 30 est dans la configuration escamotée CE. L'appareil est aussi mobile et facilement transportable, ce qui facilite le réaménagement ou la réorganisation d'un entrepôt. Par exemple, il est facile de remplacer un opérateur à une station de préparation de commande par l'appareil de traitement d'articles 10 de la présente divulgation, et inversement.

Le passage de la configuration déployée CD à la configuration escamotée CE et inversement de la configuration escamotée CE à la configuration déployée CD peut être réalisé de façon manuelle, autrement dit de manière non motorisée et sans assistance mécanique. Ainsi, la conception et la fabrication de l'appareil de traitement sont ainsi facilitées.

Le traitement d'un article peut comprendre la saisie d'un article dans un premier conteneur 110 et la dépose de l'article saisi dans un deuxième conteneur 110, notamment en vue d'une préparation de commande. En d'autres termes, le bras robotisé 50 peut être configuré pour saisir, par l'intermédiaire de l'organe de préhension 51, un article dans le premier conteneur 110 et le déposer dans le deuxième conteneur 110. Le traitement d'articles peut aussi comprendre la répartition d'articles dans plusieurs conteneurs 110, ou encore la réalisation d'un inventaire.

Chaque conteneur 110 peut comprendre un fond et une paroi latérale délimitant le volume interne du conteneur 110. Le volume interne de chaque conteneur 110 peut être accessible par une ouverture supérieure, de préférence délimitée par la paroi latérale. Chaque conteneur 110 peut présenter une forme parallélépipédique.

Le châssis 20 présente, selon une première direction X1, un côté avant 21 configuré pour faire face audit au moins un conteneur 110 et un côté arrière 22 opposé au côté avant 21 selon la première direction X1. On comprend par ailleurs que le côté avant 21 du châssis 20 est configuré pour faire face à un ou plusieurs conteneurs 110. Le châssis 20 peut présenter un premier côté latéral 23 et un second côté latéral 24 opposés l'un de l'autre selon une deuxième direction X2 qui est de préférence perpendiculaire à la première direction X1.

Le châssis 20 peut être adapté pour être posé au sol, notamment sans être ancré de manière définitive au sol. Le châssis 20 peut présenter une forme sensiblement parallélépipédique. Le châssis 20 peut comprendre un ou plusieurs pieds 25 destinés à reposer au sol, de préférence de hauteur H réglable.

Le châssis 20 peut intégrer tous les éléments permettant de faire fonctionner l'appareil de traitement d'articles 10, tels qu'une pompe à vide, une unité de contrôle et/ou un câblage électrique. De tels éléments de fonctionnement sont décrits plus en détail ci-après. Le châssis 20 peut comprendre un logement interne 20a adapté pour recevoir les éléments de fonctionnement de l'appareil. Autrement dit encore, le châssis 20 peut être creux le rendant ainsi apte à recevoir les éléments de fonctionnement de l'appareil. Le châssis 20 peut comprendre une ouverture permettant l'accès au logement interne. Le châssis 20 peut comprendre une porte 20f permettant d'obturer l'ouverture.

Plus particulièrement, le châssis 20 peut comprendre une base inférieure 20b, une pluralité de montants verticaux 20c et des panneaux s'étendant entre et étant portés par les montants verticaux 20c. La pluralité de montants verticaux 20c peut comprendre une paire de montants avant à l'avant du châssis 20 et une paire de montants arrière à l'arrière du châssis 20. Le châssis 20 peut comprendre un plateau supérieur 20d sur lequel repose le bras robotisé 50, de préférence porté par les montants verticaux 20c. Le plateau supérieur 20d peut comprendre un cadre 20e solidaire des montants verticaux 20c, comportant par exemple une paire de longerons latéraux disposés au niveau de chaque côté latéral du châssis 20 et s'étendant de préférence selon la première direction X1, et une paire de longerons centraux disposés à l'avant et l'arrière du châssis et s'étendant de préférence selon la deuxième direction X2.

Le châssis 20 peut comprendre au moins un évidement inférieur 27 et/ou une paire de trous 26, adaptés pour recevoir les broches d'une fourche de levage. La fourche de levage peut par exemple être celle d'un transpalette. Le châssis 20 peut comprendre un évidement inférieur 27 et/ou une paire de trous 26 au niveau d'un des côtés latéraux du châssis 20 ou au niveau de chaque côté latéral du châssis 20. Alternativement ou au surplus, le châssis 20 peut comprendre un évidement inférieur 27 et/ou une paire de trous 26 au niveau du côté avant 21 et/ou du côté arrière 22. Cette configuration permet une flexibilité dans la prise et la dépose de l'appareil dans un entrepôt et/ou dans le chargement et le déchargement d'un camion. L'évidement inférieur 27 et/ou la paire de trous 26 peuvent être agencés au niveau d'une portion inférieure du châssis.

Le bras robotisé 50 peut être un bras polyarticulé, de préférence de type industriel (en distinction des robots dits « collaboratifs »), notamment définissant au moins six axes de rotation et qui est adapté pour déplacer et/ou orienter l'organe de préhension 51 suivant six degrés de liberté. Le bras robotisé 50 peut être monté sur une face supérieure du châssis 20.

L'organe de préhension 51 peut être un préhenseur pneumatique par le vide, l'appareil de traitement d'articles 10 comprenant une source de vide disposée à l'intérieur du châssis 20 et en communication fluidique avec l'organe de préhension 51. La source de vide peut être une pompe à vide telle qu'une pompe à turbine ou une pompe à palette, ou un Venturi. La pompe à turbine produit un débit élevé d'air, mais un niveau de vide faible. Ce type de pompe est adapté pour la saisie d'objets poreux. Au contraire, la pompe à palette produit un débit faible d'air, mais un niveau de vide élevé. La pompe à effet Venturi comprend un compresseur produisant de l'air comprimé. L'accélération de l'air comprimé dans une conduite permet de créer une dépression. Le débit d'air est faible, mais le niveau de vide est élevé. En variante, l'organe de préhension 51 peut être une pince mécanique pourvue de doigts pour saisir l'article.

Le bras robotisé 50 peut être monté sur le châssis 20 plus proche du côté avant 21 que du côté arrière 22. Le montage à l'avant du bras robotisé 50 permet d'accéder plus facilement au volume intérieur du conteneur 110 contenant l'article à saisir. Les éléments les plus lourds de l'appareil, tel que le compresseur, sont alors disposés côté arrière 22. En outre, le châssis 20 peut présenter un centre de gravité plus proche du côté arrière 22 que du côté avant 21. Le positionnement vers l'arrière du centre de gravité évite ainsi un basculement de la station de préparation de commande lors d'un déplacement du bras robotisé 50.

La structure de support 30 peut être articulée pivotante, de préférence de manière libre (c'est-à-dire sans assistance mécanique, sans être motorisée et sans être contrainte dans son mouvement), par rapport au châssis 20 autour d'un premier axe A1. Le premier axe peut s'étendre selon la deuxième direction X2. La structure de support mobile peut être déplacée entre la configuration déployée CD et la configuration escamotée CE par pivotement par rapport au châssis 20 autour du premier axe A1. En particulier, selon un premier sens pour passer de la configuration déployée CD à la configuration escamotée CE et selon un second sens, opposé au premier sens, pour passer de la configuration escamotée CE à la configuration déployée CD.

La structure de support 30 peut comprendre au moins un bras de support 31 ; 32.

Ledit au moins un bras de support 31 ; 32 comporte un premier segment 33 et un deuxième segment 34, le deuxième segment 34 étant articulé pivotant, de préférence de manière libre, par rapport au premier segment 33 autour d'un deuxième axe A2. Cela permet de minimiser encore plus le volume de l'appareil de traitement d'articles lorsque la structure de support 30 est dans la configuration escamotée CE. Le deuxième axe A2 peut être parallèle au premier axe A1. Aussi, le deuxième axe A2 peut s'étendre selon la deuxième direction X2.

Le premier segment 33 de chaque bras de support 31 ; 32 peut être articulé pivotant, de préférence de manière libre, par rapport au châssis 20 autour du premier axe A1. Plus particulièrement, le premier segment 33 de chaque bras de support 31 ; 32 peut être articulé pivotant autour du premier axe A1 par rapport à un montant vertical 20c respectif du châssis 20, et de préférence un montant vertical 20c arrière du châssis 20, notamment au niveau d'une extrémité supérieure de ce dernier. Le premier segment 33 de chaque bras de support 31 ; 32 peut présenter une première extrémité et une seconde extrémité, le premier segment 33 étant articulé pivotant au niveau de la première extrémité par rapport au au châssis 20 selon le premier axe A1. La structure mobile peut être déplacée entre la configuration déployée CD et la configuration escamotée CE par pivotement du premier segment 33 de chaque bras 31; 32 par rapport au châssis 20 autour du premier axe A1 (représenté par la flèche P1 à la figure 1) ; en particulier, selon un premier sens pour passer de la configuration déployée CD à la configuration escamotée CE et selon un second sens, opposé au premier sens, pour passer de la configuration escamotée CE à la configuration déployée CD. Il peut être prévu un mécanisme de verrouillage entre le premier segment 33 et le châssis 20, adapté pour bloquer un déplacement relatif entre le premier segment 33 et le châssis 20 dans la configuration escamotée CE et/ou dans la configuration déployée CD. Le mécanisme de verrouillage peut par exemple comprendre un élément (par exemple une plaque) fixé, par exemple par vissage ou boulonnage, avec le châssis 20 et le premier segment 33.

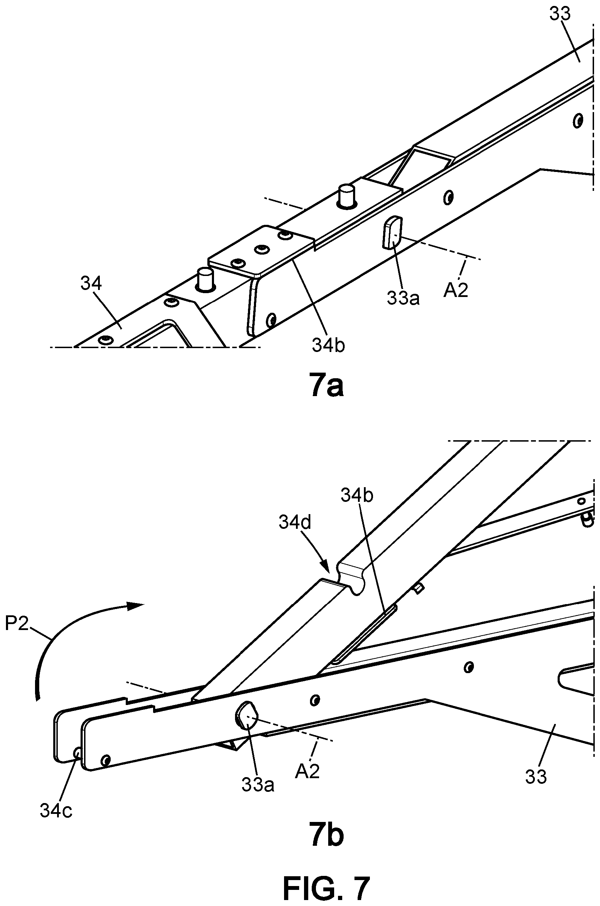

Le deuxième segment 34 de chaque bras de support 31 ; 32 peut présenter une première extrémité et une seconde extrémité, le deuxième segment 34 étant articulé pivotant au niveau de sa première extrémité par rapport au premier segment 33 du bras de support respectif, au niveau de sa seconde extrémité, selon le deuxième axe A2. Comme représenté à la figure 7, le premier segment 33 peut comprendre une fourche au niveau de la seconde extrémité qui comporte deux branches entre lesquelles s'étend un premier arbre de pivotement 33a selon le deuxième axe A2 sur lequel est monté pivotante la première extrémité du deuxième segment 34. La structure de support mobile peut être déplacée entre la configuration déployée CD et la configuration escamotée CE par pivotement du deuxième segment 34 de chaque bras 31; 32 par rapport au premier segment 33 respectif autour du deuxième axe A2 (représenté par la flèche P2 à la figure 1) ; en particulier, selon un premier sens pour passer de la configuration déployée CD à la configuration escamotée CE et selon un second sens, opposé au premier sens, pour passer de la configuration escamotée CE à la configuration déployée CD. Le deuxième segment 34 peut comprendre un premier organe de butée 34b adaptée pour être appui sur le premier segment 33 (par exemple au niveau de la seconde extrémité) dans la configuration déployée CD pour empêcher un pivotement du deuxième segment 34 dans le second sens autour du deuxième axe A2 par rapport au premier segment 33 dans la configuration déployée CD. Le premier segment 33 peut comprendre un premier arbre de butée 34c s'étendant entre les branches de la fourche au niveau de la seconde extrémité. Le deuxième segment 34 peut être appui sur le premier arbre de butée 34c (par exemple par coopération avec une première rainure 34d pratiquée dans la première extrémité du deuxième segment 34) dans la configuration déployée CD pour empêcher un pivotement du deuxième segment 34 dans le second sens autour du deuxième axe A2 par rapport au premier segment 33 dans la configuration déployée CD. Selon une variante de réalisation, un mécanisme de verrouillage peut être prévu entre le premier segment 33 et le deuxième segment 34, adapté pour bloquer un déplacement relatif entre le premier segment 33 et le deuxième segment 34 dans la configuration escamotée CE et/ou dans la configuration déployée CD.

Le pivotement du deuxième segment 34 de chaque bras 31; 32 peut être, en tout ou partie, simultané ou consécutif, du pivotement du premier segment 33 respectif. Dans le cas où le premier axe A1 et le deuxième axe A2 sont parallèles, le premier sens de pivotement du deuxième segment 34 de chaque bras 31; 32 peut coïncider ou être opposé au sens de pivotement du premier segment 33 respectif.

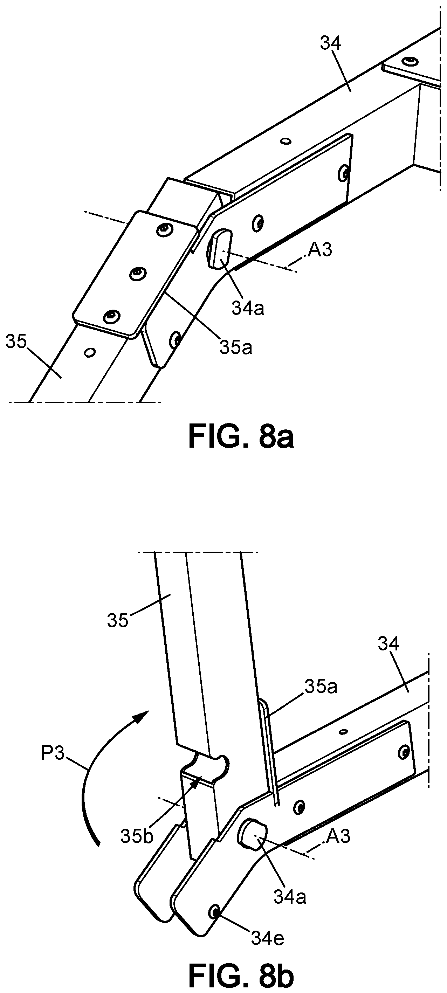

Chaque bras de support 31; 32 peut comprendre un troisième segment 35. Le troisième segment 35 de chaque bras de support 31; 32 peut être articulé pivotant, de préférence de manière libre, par rapport au deuxième segment 34 autour d'un troisième axe A3. Le troisième axe A3 peut être parallèle au premier axe A1 et/ou au deuxième axe A2. Aussi, le troisième axe A3 peut s'étendre selon la deuxième direction X2. Le troisième segment 35 de chaque bras de support 31; 32 peut présenter une première extrémité et une seconde extrémité, le troisième segment 35 étant articulé pivotant au niveau de sa première extrémité par rapport au deuxième segment 34 du bras de support respectif, au niveau de sa seconde extrémité, selon le deuxième axe A2. La seconde extrémité du troisième segment 35 de chaque bras de support 31; 32 peut être une extrémité libre. Comme représenté à la figure 8, le deuxième segment 34 peut comprendre une fourche au niveau de la seconde extrémité qui comporte deux branches entre lesquelles s'étend un deuxième arbre de pivotement 34a selon le troisième axe A3 sur lequel est monté pivotante la première extrémité du troisième segment 35.

La structure de support mobile peut être déplacée entre la configuration déployée CD et la configuration escamotée CE par pivotement du troisième segment 35 de chaque bras 31; 32 par rapport au deuxième segment 34 respectif autour du troisième axe A3 (représenté par la flèche P3 à la figure 1), en particulier, selon un premier sens pour passer de la configuration déployée CD à la configuration escamotée CE et selon un second sens, opposé au premier sens, pour passer de la configuration escamotée CE à la configuration déployée CD. Le troisième segment 35 peut comprendre un deuxième organe de butée 35a adaptée pour être appui sur le deuxième segment 34 (par exemple au niveau de la seconde extrémité) dans la configuration déployée CD pour empêcher un pivotement du deuxième segment 34 selon le second sens autour du troisième axe A3 par rapport au deuxième segment 34 dans la configuration déployée CD. Le deuxième segment 34 peut comprendre un deuxième arbre de butée 34e s'étendant entre les branches de la fourche au niveau de la seconde extrémité. Le troisième segment 35 peut être appui sur le deuxième arbre de butée 34e (par exemple par coopération avec une deuxième rainure 35b pratiquée dans la première extrémité du troisième segment 35) dans la configuration déployée CD pour empêcher un pivotement du troisième segment 35 selon le second sens autour du troisième axe A3 par rapport au deuxième segment 34 dans la configuration déployée CD. Selon une variante de réalisation, un mécanisme de verrouillage peut être prévu entre le deuxième segment 34 et le troisième segment 35, adapté pour bloquer un déplacement relatif entre le deuxième segment 34 et le troisième segment 35 dans la configuration escamotée CE et/ou dans la configuration déployée CD.

Le pivotement du troisième segment 35 de chaque bras 31; 32 peut être, en tout ou partie, simultané ou consécutif, du pivotement du deuxième segment 34 respectif et/ou du premier segment 33 respectif. Dans le cas où le premier axe A1 et le troisième axe A3 sont parallèles, le premier sens de pivotement du troisième segment 35 de chaque bras 31; 32 peut coïncider ou être opposé au sens de pivotement du premier segment 33 respectif. Dans le cas où le deuxième axe A2 et le troisième axe A3 sont parallèles, le premier sens de pivotement du troisième segment 35 de chaque bras 31; 32 peut coïncider ou être opposé au sens de pivotement du deuxième segment 34 respectif.

Par « segment », il est entendu un tronçon solide, c'est-à-dire dépourvu d'articulation mobile. Un segment peut être rectiligne, c'est-à-dire droit. Il n'est pas exclu qu'un segment présente une forme quelconque, par exemple arquée ou arrondie. Il n'est pas non plus exclu qu'un segment puisse comprendre plusieurs parties rapportées de manière fixe.

La structure de support 30 peut comprendre un premier bras de support 31 et un deuxième bras de support 32 parallèles entre eux et espacés selon la direction du premier axe A1 et du deuxième axe A2. La structure de support 30 est ainsi plus stable. Cette configuration est notamment préférée lorsque le premier axe et le deuxième axe sont parallèles entre eux. Le premier bras de support 31 et le deuxième bras de support 32 peuvent être identiques. La structure de support 30 peut en outre comprendre au moins une traverse 36 s'étendant entre le premier bras de support 31 et le deuxième bras de support 32 selon la direction du premier axe A1 et du deuxième axe A2. Une telle traverse 36 rend la structure de support plus résistance.

Le passage de la configuration escamotée CE à la configuration déployée CD peut être réalisé par un opérateur seul.

Comme indiqué précédemment, dans la configuration déployée CD de la structure de support 30, ladite au moins une caméra 40 est positionnée de sorte à être orientée vers un conteneur 110 à proximité du châssis 20. Autrement dit, dans la configuration déployée CD de la structure de support 30, ladite au moins une caméra 40 est positionnée de sorte que celle-ci présente un axe optique orienté vers un conteneur 110 à proximité du châssis 20. En particulier, dans la configuration déployée CD de la structure de support 30, ladite au moins une caméra 40 peut être orientée vers le côté avant 21 du châssis 20.

Dans la configuration déployée CD de la structure de support 30, ladite au moins une caméra 40 peut être agencée sensiblement en face du fond d'un conteneur 110 à proximité du châssis 20. Dans le cas où le fond du conteneur 110 est horizontal (c'est-à-dire à plat), ladite au moins une caméra 40 peut être agencée sensiblement verticalement au-dessus du conteneur 110 dans la configuration déployée CD de la structure de support 30. Autrement dit, dans la configuration déployée CD de la structure de support 30, un axe optique de ladite au moins une caméra 40 peut être vertical ou proche de la verticale, lorsque le conteneur est disposé sur un plan horizontal. Plus généralement, l'axe optique de ladite au moins une caméra 40 peut être perpendiculaire ou sensiblement perpendiculaire au plan formé par le fond du conteneur. Cela permet d'améliorer l'image acquise du volume intérieur du conteneur 110.

La fixation de la ou des caméras 40 sur la structure de support 30 facilite l'installation de l'appareil de traitement d'articles 10 en entrepôt en s'assurant que la ou les caméras 40 sont correctement positionnées après déploiement de la structure support. La calibration extrinsèque des caméras 40, c'est-à-dire le positionnement relatif des caméras par rapport à leur environnement et notamment par rapport au bras robotisé, en est facilitée. Ladite au moins une caméra 40 peut être fixée à ladite au moins une traverse 36.

L'appareil de traitement d'articles 10 peut comprendre une pluralité de caméras 40, chacune étant apte à acquérir une image du volume interne d'un conteneur 110 respectif disposé à proximité du châssis 20.

Lorsque la structure de support 30 est dans la configuration déployée CD, une première caméra 40 peut être orientée vers le côté avant 21 du châssis 20 pour acquérir une image du volume interne d'un premier conteneur 110 comprenant un ou plusieurs articles à saisir et une deuxième caméra 40 peut être orientée vers le côté avant 21 du châssis 20 pour acquérir une image du volume interne d'un deuxième conteneur 110 dans lequel un article est à déposer.

Ainsi, l'appareil de traitement d'articles peut présenter une profondeur P selon la première direction X1 qui est plus petite lorsque la structure de support 30 est dans la configuration escamotée CE que lorsqu'il est dans la configuration déployée CD. De même, l'appareil de traitement d'articles peut présenter une hauteur H selon une direction verticale qui est plus petite lorsque la structure de support 30 est dans la configuration escamotée CE que lorsqu'il est dans la configuration déployée CD.

En outre, l'appareil de traitement d'articles peut présenter un volume lorsque la structure de support 30 est dans la configuration escamotée CE qui le rend apte à être introduit dans un conteneur 110 de forme parallélépipédique de dimensions standards, notamment de 20 pieds ou 40 pieds. Il peut s'agir d'un conteneur 110 de marchandise de dimensions standardisées selon la norme ISO 668. En particulier, un conteneur 110 (aussi appelé « dry container » en anglais) de 20 pieds (soit 6,1 m) ou 40 pieds (soit 12,2 m) de long peut présenter une hauteur H de 8,5 pieds (soit 2,62 m) ou 9,5 pieds (soit 2,92 m), et une largeur de 8 pieds (soit 2,44 m), ainsi qu'une ouverture de porte minimum de largeur 2,28 m et de hauteur H 2,26 m. L'appareil de traitement d'articles 10 peut alors être chargé dans un conteneur 110 de transport de marchandises dans sa position escamotée et être déchargé dans un entrepôt dans un état « prêt-à-l'emploi » en le faisant passer de la position escamotée à la position déployée.

L'appareil de traitement d'articles 10 peut comprendre une unité de contrôle configurée pour contrôler le bras robotisé 50 et pour traiter un signal reçu de ladite au moins une caméra 40 afin d'identifier des articles dans les conteneurs 110 et/ou de localiser l'emplacement d'articles dans les conteneurs 110. L'unité de contrôle peut être disposée à l'intérieur du châssis 20.

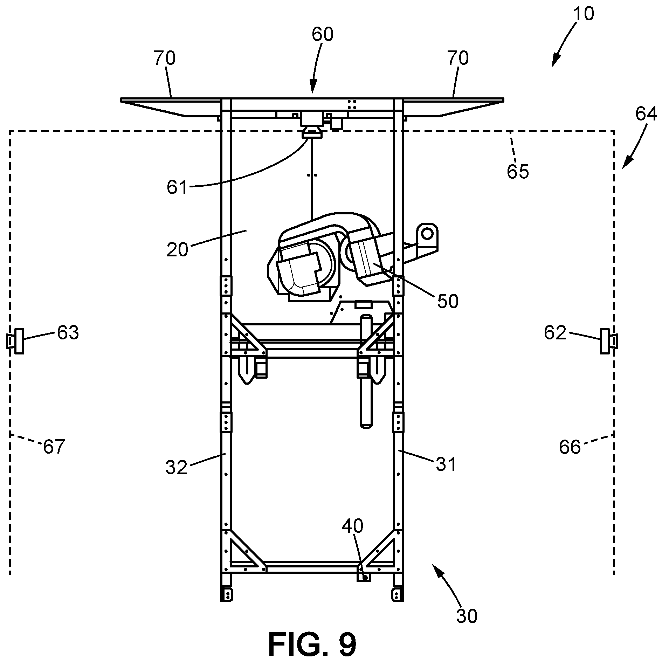

Comme représenté à la figure 9, l'appareil de traitement d'articles 10 peut aussi comprendre un système de capteurs de sécurité 60 configuré pour projeter une barrière immatérielle 64 et détecter le franchissement de la barrière immatérielle 64 par un objet et/ou un opérateur. Le système de capteur peut être en outre configuré pour générer une commande d'interruption du bras robotisé 50 et/ou une commande de signal lumineux et/ou sonore en cas de détection de franchissement de la barrière immatérielle 64. Ainsi, lorsqu'un opérateur ou un objet franchit ou intercepte la barrière immatérielle 64, le bras robotisé 50 s'interrompt et/ou un signal lumineux et/ou sonore peut se déclencher.

Un tel système de capteurs de sécurité 60 est avantageusement rapide à installer.

La barrière immatérielle 64 peut comprendre un faisceau central 65 s'étendant transversalement au niveau d'un côté arrière 22 du châssis 20 opposé au côté avant 21 selon la première direction X1, et une paire de faisceaux latéraux s'étendant chacun selon la première direction X1 et agencée transversalement à la première direction X1 de chaque côté du châssis 20. Autrement dit, la paire de faisceaux latéraux comprend un premier faisceau latéral 66 s'étendant selon la première direction X1 qui est agencé en vis-à-vis du premier côté latéral 23 du châssis 20 et un second faisceau latéral 67 s'étendant selon la première direction X1 qui est agencé en vis-à-vis du second côté latéral 24 du châssis 20.

Le système de capteurs de sécurité 60 peut comprendre un ou plusieurs capteurs lidar *(« Light Detection And Ranging »* en anglais), de préférence adapté pour émettre un faisceau rotatif sur une plage angulaire d'au moins 270°, notamment 360°. Le système de capteurs de sécurité 60 peut comprendre un capteur central 61 monté sur le châssis 20 au niveau du côté arrière 22, et une paire de capteurs latéraux disposés transversalement à la première direction X1 de chaque côté du châssis 20. Autrement dit, la paire de capteurs latéraux peut comprendre un premier capteur latéral 62 agencé en vis-à-vis du premier côté latéral 23 du châssis 20 et un second capteur latéral 63 agencé en vis-à-vis du second côté latéral 24 du châssis 20. Les capteurs latéraux peuvent être reliés à la structure de support 30, notamment par une patte de liaison respective. Plus particulièrement, le premier capteur latéral 62 peut être relié au premier bras de support 31 et le second capteur latéral 63 peut être relié à au deuxième bras de support 32.

A des fins de sécurité encore, l'appareil de traitement d'articles 10 peut comprendre un panneau de protection 70 monté sur le châssis 20 au niveau du côté arrière 22. Le panneau de protection 70 permet de renforcer la sécurité du système en empêchant un opérateur de s'approcher trop rapidement de la zone de travail du bras robotisé 50. Le panneau permet en outre de sécuriser la zone morte des capteurs. Le panneau de protection 70 peut s'étendre perpendiculairement à la première direction X1.

L'appareil de traitement d'articles 10 tel que décrit ci-avant peut présenter une masse inférieure ou égale à 700kg, avantageusement inférieure ou égale à 600 kg. L'appareil de traitement d'articles 10 présente ainsi une masse qui permet un déplacement par tirage manuel, par exemple au moyen d'un transpalette manuel, sans dépasser les limites légales de charge, notamment en tirage horizontal.

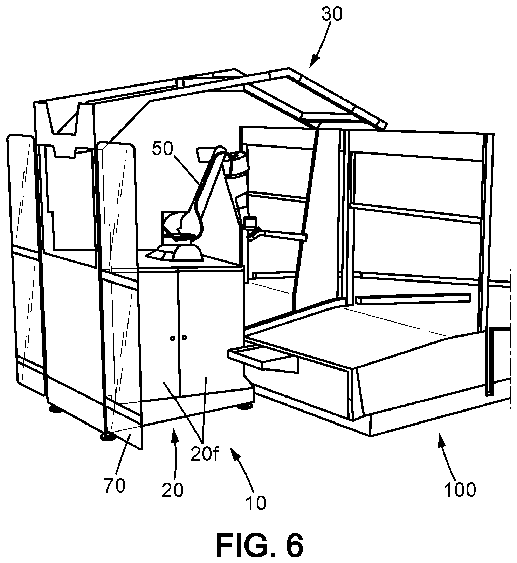

La figure 6 comprend un ensemble pour entrepôt de logistique comprenant un appareil de traitement d'articles 10 tel que décrit ci-avant et une rampe 100 de surélévation. La rampe 100 de surélévation est configurée pour permettre l'acheminement dudit au moins un conteneur 110 à proximité du châssis 20 par un véhicule motorisé (de sorte que le bras robotisé 50 soit apte à saisir et/ou déposer un article dans le volume interne du conteneur 110. On évite ainsi l'usage de convoyeurs lourds et encombrants. La rampe 100 peut être adaptée à accueillir un ou plusieurs véhicules motorisés. Les véhicules peuvent être à guidage automatique, c'est à dire du type « automated guided vehicle » ou AGV en anglais. À cet effet, les véhicules peuvent comprendre des moyens de guidage embarqués adaptés au guidage automatique. Les véhicules motorisés peuvent être adaptés au transport d'un conteneur 110. La rampe 100 peut faire face au côté avant 21 du châssis 20 de l'appareil de traitement d'articles 10.

## Revendications

1. Appareil de traitement d'articles (10) mobile comprenant :
- un châssis (20),
- un bras robotisé (50) monté sur le châssis (20) et muni à son extrémité d'un organe de préhension (51), le bras robotisé (50) étant configuré pour saisir et/ou déposer un article dans un volume interne d'au moins un conteneur (110) disposé à proximité dudit châssis (20) ,
- une structure de support (30) montée sur le châssis (20),
- au moins une caméra (40) fixée sur la structure de support (30),
**caractérisé en ce que** la structure de support (30) est mobile entre une configuration déployée (CD) dans laquelle la caméra (40) est apte à acquérir une image du volume interne du conteneur (110) et une configuration escamotée (CE) dans laquelle l'appareil de traitement d'articles (10) présente un volume inférieur par rapport à la configuration déployée (CD).

2. Appareil de traitement d'articles (10) selon la revendication précédente, dans lequel la structure de support (30) est articulée pivotante par rapport au châssis (20) autour d'un premier axe (A1).

3. Appareil de traitement d'articles (10) selon l'une quelconque des revendications précédentes, dans lequel la structure de support (30) comprend au moins un bras de support qui comporte un premier segment (33) et un deuxième segment (34), le deuxième segment (34) étant articulé pivotant par rapport au premier segment (33) autour d'un deuxième axe (A2).

4. Appareil de traitement d'articles (10) selon les revendications 2 et 3, dans lequel le premier axe (A1) et le deuxième axe (A2) sont parallèles, la structure de support (30) comprenant un premier bras de support (31) et un deuxième bras de support (32) parallèles entre eux et espacés selon la direction du premier axe (A1) et du deuxième axe (A2).

5. Appareil de traitement d'articles (10) selon la revendication précédente, dans lequel la structure de support (30) comprend au moins une traverse (36) s'étendant entre le premier bras de support (31) et le deuxième bras de support (32) selon la direction du premier axe (A1) et du deuxième axe (A2), ladite au moins une caméra (40) étant de préférence fixée à ladite au moins une traverse (36).

6. Appareil de traitement d'articles (10) selon l'une quelconque des revendications précédentes, dans lequel le châssis (20) présente, selon une première direction (X1), un côté avant (21) configuré pour faire face audit au moins un conteneur (110) et un côté arrière (22) opposé au côté avant (21) selon la première direction (X1), le bras robotisé (50) étant monté sur le châssis (20) plus proche du côté avant (21) que du côté arrière (22), le châssis (20) présentant de préférence un centre de gravité plus proche du côté arrière (22) que du côté avant (21).

7. Appareil de traitement d'articles (10) selon la revendication précédente, lequel présentant une profondeur (P) selon la première direction (X1) qui est plus petite lorsque la structure de support (30) est dans la configuration escamotée (CE) que lorsqu'il est dans la configuration déployée (CD).

8. Appareil de traitement d'articles (10) selon l'une quelconque des revendications précédentes, lequel présentant une hauteur (H) selon une direction verticale qui est plus petite lorsque la structure de support (30) est dans la configuration escamotée (CE) que lorsqu'il est dans la configuration déployée (CD).

9. Appareil de traitement d'articles (10) selon l'une quelconque des revendications précédentes, lequel présentant un volume lorsque la structure de support (30) est dans la configuration escamotée (CE) le rendant apte à être introduit dans un conteneur (110) de forme parallélépipédique de dimensions standards, notamment de 20 pieds ou 40 pieds.

10. Appareil de traitement d'articles (10) selon l'une quelconque des revendications précédentes, dans lequel l'organe de préhension (51) est un préhenseur pneumatique par le vide, l'appareil de traitement d'articles (10) comprenant une source de vide disposée à l'intérieur du châssis (20) et en communication fluidique avec l'organe de préhension (51).

11. Appareil de traitement d'articles (10) selon l'une quelconque des revendications précédentes, lequel comprenant une unité de contrôle configurée pour contrôler le bras robotisé (50) et pour traiter un signal reçu de ladite au moins une caméra (40) afin d'identifier des articles dans les conteneurs (110) et/ou de localiser l'emplacement d'articles dans les conteneurs (110), l'unité de contrôle étant disposée à l'intérieur du châssis (20).

12. Appareil de traitement d'articles (10) selon l'une quelconque des revendications précédentes, dans lequel le châssis (20) comprend au moins un évidement inférieur (27) et/ou une paire de trous (26), adaptés pour recevoir les broches d'une fourche de levage.

13. Appareil de traitement d'articles (10) selon l'une quelconque des revendications précédentes, lequel comprend un système de capteurs de sécurité (60) configuré pour projeter une barrière immatérielle (64) et détecter le franchissement de la barrière immatérielle (64) par un objet et/ou un opérateur.

14. Appareil de traitement d'articles (10) selon la revendication précédente, la revendication 6 s'appliquant, dans lequel la barrière immatérielle (64) comprend :
- un faisceau central (65) s'étendant transversalement au niveau d'un côté arrière (22) du châssis (20) opposé au côté avant (21) selon la première direction (X1),
- une paire de faisceaux latéraux s'étendant chacun selon la première direction (X1) et agencée transversalement à la première direction (X1) de chaque côté du châssis (20).

15. Appareil de traitement d'articles (10) selon l'une quelconque des revendications précédentes, la revendication 6 s'appliquant, lequel comprenant un panneau de protection (70) monté sur le châssis (20) au niveau du côté arrière (22).

16. Appareil de traitement d'articles (10) selon l'une quelconque des revendications, lequel présentant une masse inférieure ou égale à 700 kg.

17. Ensemble pour entrepôt de logistique comprenant un appareil de traitement d'articles (10) selon l'une quelconque des revendications précédentes et une rampe (100) de surélévation, la rampe (100) de surélévation étant configurée pour permettre l'acheminement dudit au moins un conteneur (110) à proximité du châssis (20) par un véhicule motorisé de sorte que le bras robotisé (50) soit apte à saisir et/ou déposer un article dans le volume interne du conteneur (110).

18. Ensemble pour entrepôt de logistique selon la revendication précédente, lequel comprenant un conteneur (110) disposé à proximité du châssis (20) de l'appareil de traitement d'articles (10), ladite au moins une caméra (40) étant agencée en face du fond du conteneur (110) lorsque la structure de support (30) est dans la configuration déployée (CD).
